# EUROPEAN PATENT SPECIFICATION

(11) **EP 4 665 153 B1**
(45) Date of publication and mention of the grant of the patent: **29.04.2026**
(21) Application number: 24787579.2
(22) Date of filing: 17.09.2024
(51) Int. Cl.: A21C 11/10, A21C 3/10, A21C 3/02, A21C 11/04

(54) **PROCESS AND APPARATUS FOR MANUFACTURING MULTI-LAYERED SNACK PELLETS**
VERFAHREN UND VORRICHTUNG ZUR HERSTELLUNG VON MEHRSCHICHTIGEN SNACK-PELLETS
PROCÉDÉ ET APPAREIL DE FABRICATION DE GRANULÉS D'EN-CAS MULTICOUCHES

(30) Priority: 03.10.2023 IT 202300020448
(43) Date of publication of application: 24.12.2025
(73) Proprietor: Pavan S.p.A., 35015 Galliera Veneta (PD) (IT)
(72) Inventor: BERTONCELLO, Giuseppe, 35015 Galliera Veneta (Padova) (IT); GECCHELE, Simone, 35015 Galliera Veneta (Padova) (IT); DI NUNNO, Davide, 35015 Galliera Veneta (Padova) (IT); BASSO, Sergio, 35015 Galliera Veneta (Padova) (IT)
(74) Representative: Dondi, Silvia
(86) International application number: PCT/IB2024/059033
(87) International publication number: WO 2025/074185

(56) References cited:
- KR-B1- 101 911 896
- KR-B1- 102 209 341
- KR-B1- 102 209 341
- US-A1- 2010 196 564
- US-A1- 2010 196 564

## Description

### Technical field

The present invention relates to a process and an apparatus for manufacturing multi-layered snack pellets.

Snack pellets are a semi-finished product with various shapes and textures, which are destined to be expanded and seasoned at will to achieve the final product (snack). For illustrative purposes, the snack pellets are obtained from recipes containing for example some of the following raw materials: corn flour, corn starch, sodium bicarbonate, sugar, salt, potato flakes, potato granules, potato starch, modified potato starch, wheat flour, rice flour, wheat starch, tapioca (Manioc starch) or legume flours (lentils, chickpeas, soybeans, peas).

There are two main categories of snack pellets: 2D and 3D. 3D snack pellets have two or more sheets of dough coupled together at two opposite edges, to create the three-dimensional effect.

### Background art

To date, the manufacturing of 2D snack pellets and 3D snack pellets with two sheets is performed with a known machine, comprising a rotary moulder ("Rotovario"), made with a tempered steel roller on which the shapes of the final product are defined.

However, when producing multi-layered snack pellets (three or more sheets) continuously, it is essential to assure that the opposite edges are firmly coupled together while preventing the sheets between the two edges from sticking to each other. With the prior art solution described above, this is achieved with difficulty or poor results. The felt is need for an apparatus which can perform this task in an effective and efficient way.

US 2010/196564 A1 and KR 102 209 341 B1 disclose devices for manufacturing filled products.

### Disclosure of the invention

In this context, the technical task at the basis of the present invention is to propose a pasteurizing apparatus and a process for pasteurizing food products, which overcome the drawbacks of the prior art cited above.

In particular, it is an object of the present invention to provide a process and an apparatus for manufacturing multi-layered snack pellets, able to continuously couple three or more sheets of dough to obtain snack pellets, with the two opposite edges firmly coupled together while preventing the sheets between the two edges from sticking to each other.

Another object of the present invention is to make available a process and an apparatus for manufacturing multi-layered snack pellets, wherein the productive rate and the quality of the final product are high.

The stated technical task and specified aims are substantially achieved by an apparatus for manufacturing multi-layered snack pellets, comprising:
means for advancing at least three sheets of dough to a longitudinal cut unit;
the longitudinal cut unit comprising for each sheet a pair of longitudinal cut rollers arranged to perform a plurality of longitudinal cuts on the sheet in order to obtain a plurality of strips;
means for detecting the position of each of the sheets on the means for advancing;
means for re-aligning the sheets to an ideal conveying direction;
a control unit configured to, in response to the detection of a mispositioning of one or more of the sheets on the means for advancing, command the means for re-aligning in order to bring the one or more of the sheets back to the ideal conveying direction;
a coupling and forming unit arranged downstream of the longitudinal cut unit; said coupling and forming unit comprising a pair of a first and a second forming rollers on which all the sheets cut in strips converge, said first forming roller having at least one cutting blade having a longitudinal development on the roller and being provided with a plurality of notches distributed along said longitudinal development for coupling the strips together and simultaneously performing a transversal intermittent cut on them;
a separating unit arranged downstream of the coupling and forming unit, said separating unit comprising two counter-rotating rollers for obtaining a plurality of snack pellets.

According to one embodiment, the means for monitoring are arranged to detect the position of one or both sides of each of the sheets.

According to one embodiment, the means for monitoring comprises at least one sensor, preferably a photoelectric sensor, arranged laterally to the advancing sheets or above the advancing sheets.

According to one embodiment, the means for advancing comprise for each sheet a series of guiding rollers for guiding the sheet in its advance, said means for re-aligning the sheet comprising a movable roller and a linear actuator, said movable roller being paired with one of the guiding roller, said linear actuator acting on the roller to move it towards/away with respect to said guiding roller.

According to one embodiment, the apparatus comprises means for adjusting the operating thrust of the forming rollers on the sheets.

According to one embodiment, the means for adjusting comprises a first piston for the first forming roller and a second piston for the second forming roller; the first piston and second piston are managed independently from each other so as to generate different pressure values on the first forming roller and second forming roller, respectively.

According to one embodiment, the apparatus comprises a drying unit arranged between the coupling and forming unit and the separating unit.

The stated technical task and specified aims are substantially achieved by a process for manufacturing multi-layered snack pellets, comprising the steps of:
advancing at least three sheets of dough, each sheet of dough having a main development direction;
during the step of advancing, detecting the position of each of said sheets; in response to detecting a mispositioning of one or more of the sheets with respect to a corresponding ideal conveying direction, re-aligning the one or more sheets to said ideal conveying direction;
performing longitudinal cuts on each sheet in order to obtain a plurality of strips which continue to advance;
coupling together the plurality of strips obtained by said sheets and performing transverse intermittent cuts on them so that a multi-layered mat of quilted dough is formed;
separating the multi-layered mat into multi-layered snack pellets.

According to one aspect of the invention, the step of detecting the position of each of said sheets takes place by detecting the position of one or both sides of each of the sheets.

According to one embodiment, the step of detecting the position of each of said sheets is carried out by means of one or more sensors arranged laterally to the advancing sheets or above the advancing sheets.

According to one embodiment, the step of advancing at least three sheets of dough comprise a step of guiding each of the sheets by means of a series of guiding rollers, at least one of the guiding roller being paired with a movable roller, the step of re-aligning the sheet taking place by moving the roller towards/away with respect to said at least one of the guiding roller.

According to one embodiment, the step of coupling together the plurality of strips obtained by the sheets and performing transverse intermittent cuts on them is carried out by a pair of a first and a second forming rollers. Preferably, the first forming roller has at least one cutting blade for pinching the strips together and simultaneously performing a transversal cut of the strips. The cutting blade has a longitudinal development on the roller and is provided with a plurality of notches distributed along the longitudinal development. The notches cause the intermittent cut.

According to one aspect of the invention, the method comprises the step of generating an adjustable thrust of the forming rollers on the sheets.

According to one aspect of the invention, the method comprises a step of drying the multi-layered mat.

### Brief description of drawings

Further characteristics and advantages of the present invention will more fully emerge from the non-limiting description of a preferred but not exclusive embodiment of a process and an apparatus for manufacturing multi-layered snack pellets, as illustrated in the accompanying figures, in which:

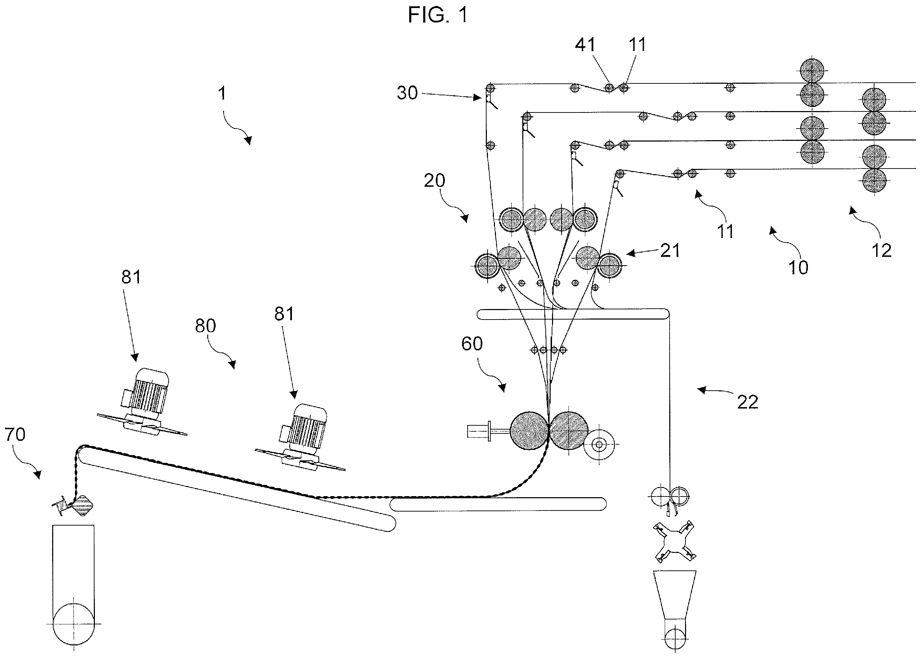

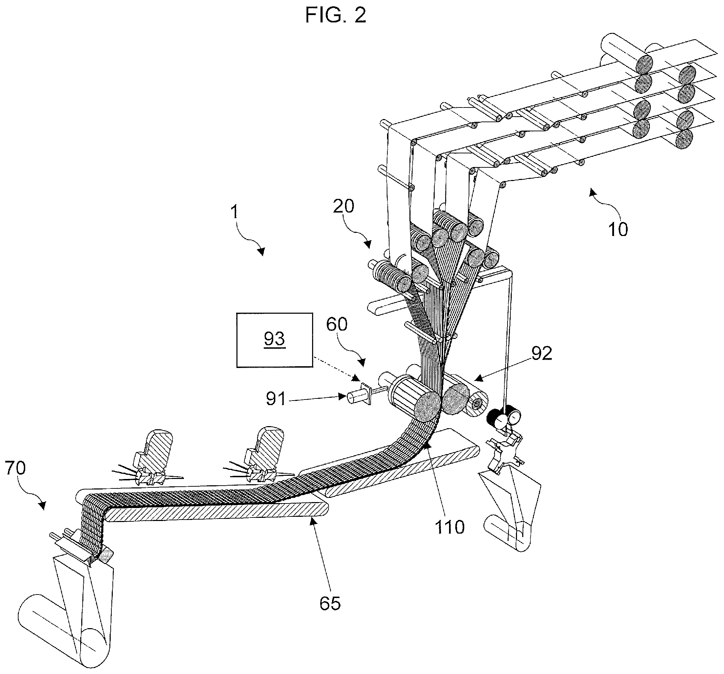

- figures 1 and 2 illustrates an apparatus for manufacturing multi-layered snack pellets, according to the present invention, respectively in a lateral view and a perspective view;

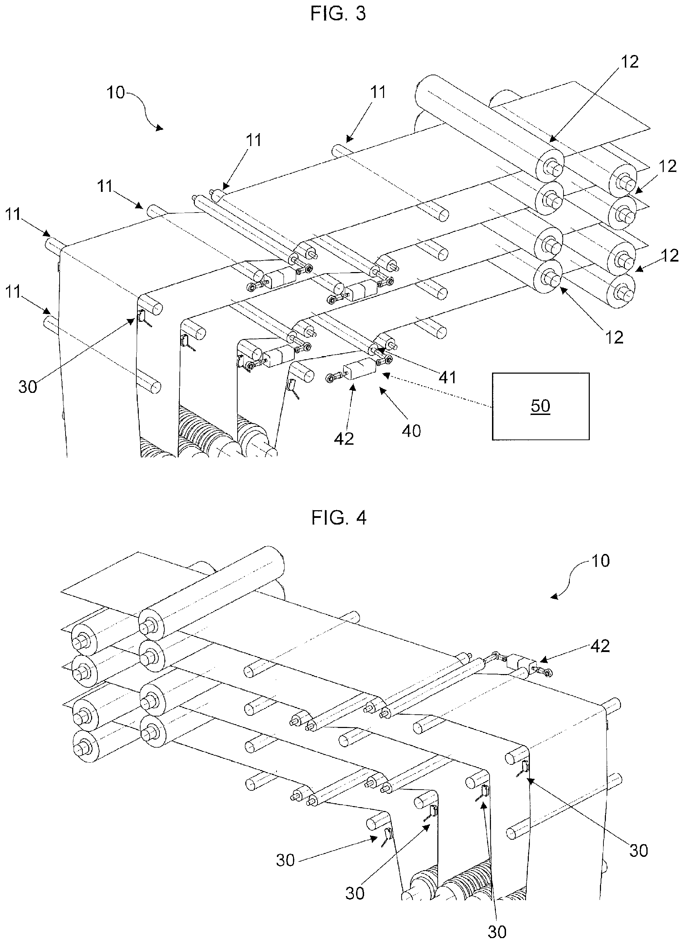

- figure 3 and 4 illustrates a detail (means for advancing) of the apparatus of figure 1, in perspective view respectively from the left and right;

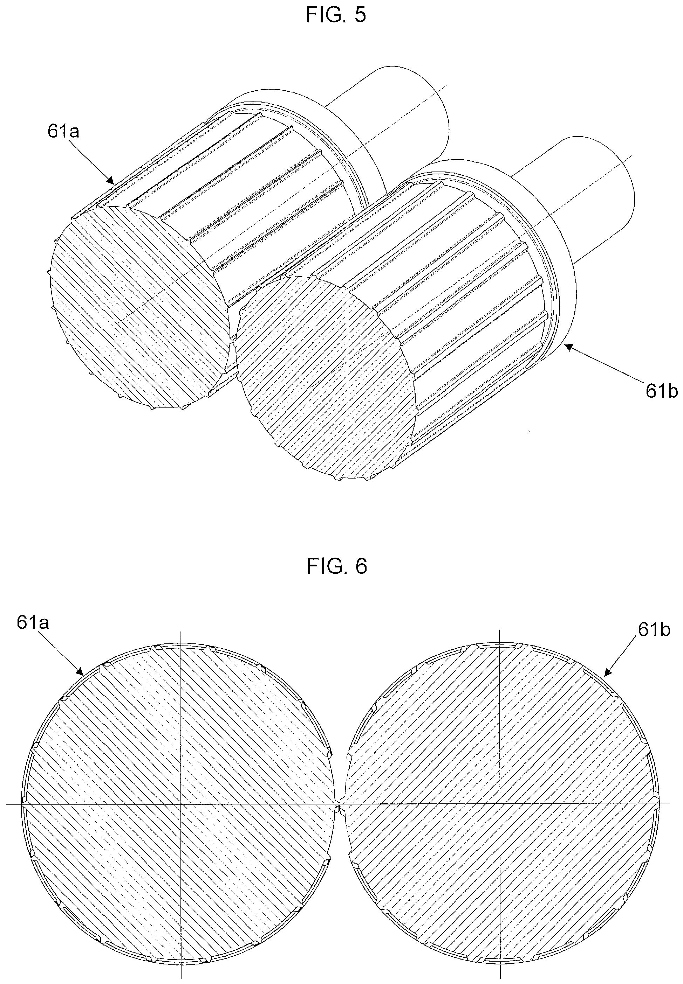

- figure 5 and 6 illustrates a detail (forming rollers) of the apparatus of figure 1, respectively in a perspective partial view and in a cross section view;

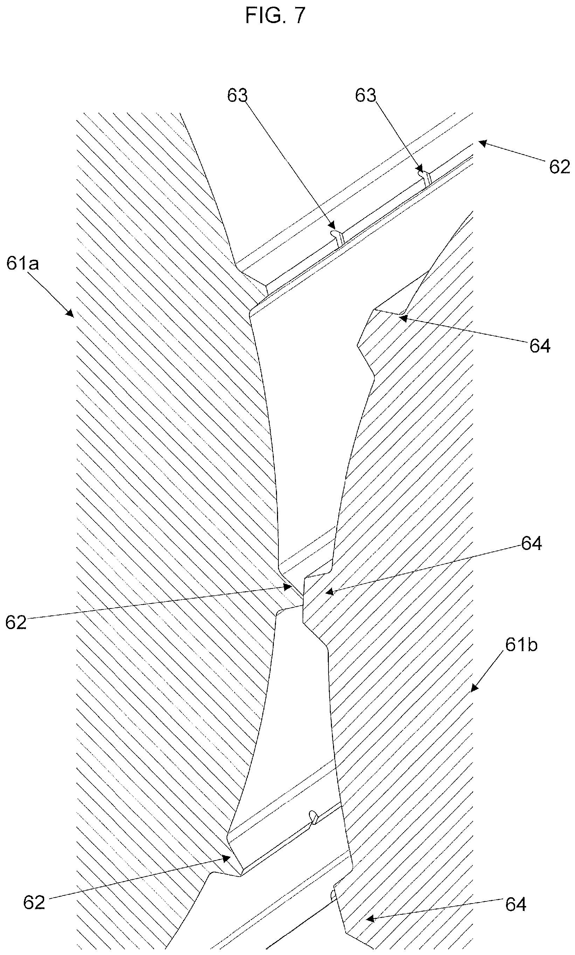

- figure 7 illustrates a zoom view of the forming rollers of figure 5;

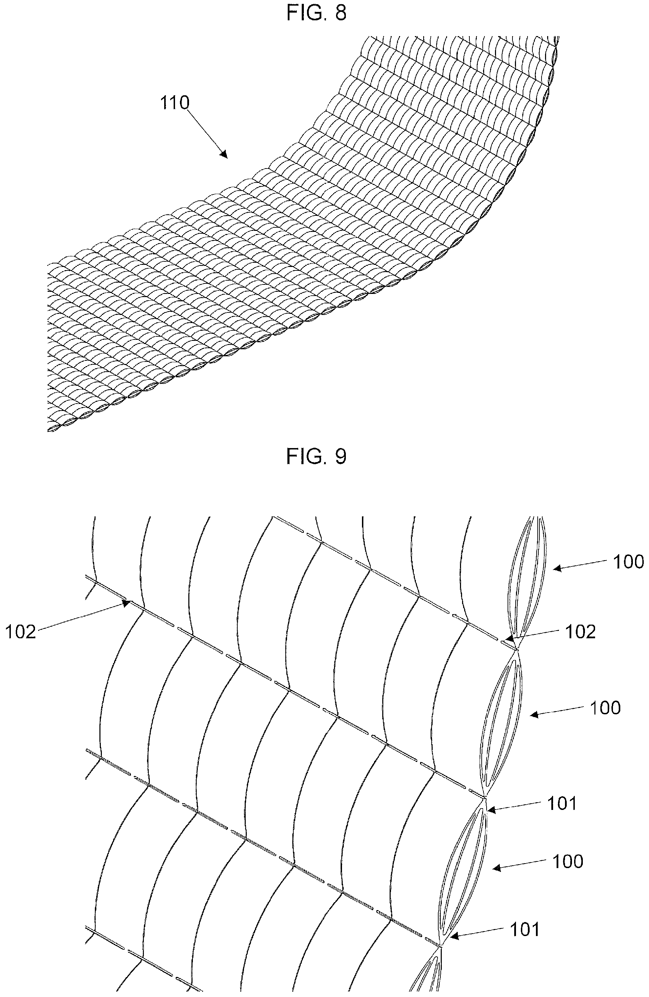

- figure 8 illustrates a perspective view of an intermediate product (multi-layered mat) obtained with the process and the apparatus for manufacturing multi-layered snack pellets, according to the present invention;
- figure 9 illustrates a zoom view of the multi-layered mat of figure 8;

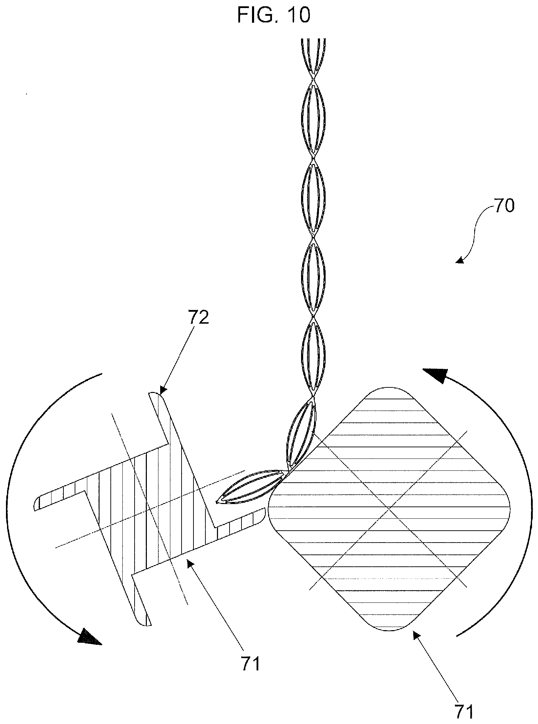

- figure 10 illustrates a detail (separating unit) of the apparatus of figure 1, in a frontal view.

### Detailed description of preferred embodiments of the invention

With reference to the drawings, number 1 denotes an apparatus for manufacturing multi-layered snack pellets. In particular, the apparatus 1 works continuously.

For multi-layered snack pellets here is intended 3D snack pellets having three or more layers.

The apparatus 1 comprises means for advancing 10 at least three sheets of dough to a longitudinal cut unit 20.

Each sheet of dough has a main development direction, which is a longitudinal direction. The main development direction is substantially parallel to a conveying direction along the means for advancing 10. Each sheet advances along an own conveying direction.

Since the apparatus works continuously, the sheet seems perceptively infinitely long. The width of the sheet is the dimension transverse, in particular orthogonal, to the main development direction.

According to the illustrated embodiment, the sheets are four with the aim of manufacturing four layers snack pellets. It will be clear from the description below that the apparatus 1 can be used in the same way for three, four or more sheets, with the appropriate addition of the components for the additional sheets.

Preferably, the means for advancing 10 comprise for each sheet a plurality of guiding rollers 11 which sustain and keep the sheet tensioned along the conveying path.

Preferably, the means for advancing 10 comprise one or more pair of pulling rollers 12 arranged upstream of the guiding rollers 11. The pulling rollers 12 furnish the pulling force necessary to the sheets to advance.

In particular, the longitudinal cut unit 20 comprises for each sheet a pair of longitudinal cut rollers 21 arranged to perform a plurality of longitudinal cuts on the sheet, in order to obtain a plurality of strips. Therefore, the strips of dough are side by side along a direction which is transverse to the main development direction, in particular orthogonal. In other words, they are flanked according to the width of the sheet.

In particular, the strips obtained by a sheet continue to advance together, similarly to the sheet before the longitudinal cuts.

In particular, one longitudinal cut roller 21 of the pair has a plurality of blades having cylindrical development around the roller.

For longitudinal cut here is intended a cut along the length of the sheet, that is also to say along the conveying direction.

Preferably, at least one pair of longitudinal cut rollers 21 is arranged above or below another pair so that one of the rollers 21 of each pair is at least partly superimposed to one of the rollers 21 of the each other pair. This allows to make the longitudinal cut unit 20 and therefore the apparatus 1 more compact.

According to the illustrated embodiment, in which the sheets are four, this arrangement is performed two by two. This means that two pairs of longitudinal cut rollers 21 are arranged side by side and below them there are the other two pairs of longitudinal cut rollers 21, more outward but partly superimposed with the above ones.

The apparatus 1 comprises means for detecting 30 the position of each of the sheets on the means for advancing 10.

The apparatus 1 comprises means for re-aligning 40 the sheets to an ideal conveying direction. In this context, the term "ideal" refers to a conveying direction which is desired. In other words, the term "ideal" is in contrast to a mispositioning or deviation from a desired conveying direction.

In response to the detection of a mispositioning of one or more of the sheets the apparatus 1 comprises a control unit 50, preferably pneumatic, configured to command the means for re-aligning 40 the sheets in order to bring the one or more of them back to the ideal conveying direction. In particular, the action of the means for re-aligning 40 takes place until the means for detecting 30 ends up detecting a mispositioning.

Preferably, the means for detecting 30 are arranged to detect the position of one or both sides of each of the sheets.

Preferably, the means for detecting 30 comprise one sensor arranged to detect when the side of the sheet is misaligned. Preferably, the sensor 30 is arranged laterally to the advancing sheets or above the advancing sheets.

Preferably, the means for detecting 30 comprise two sensors arranged on both sides of the advancing sheets.

Preferably, the sensor 30 is a photoelectric sensor. The use of a photoelectric sensor is the preferred solution, yet it is possible to use other monitoring means, known to skilled man, to achieve the same result.

Preferably, the means for re-aligning 40 the sheet comprise a movable roller 41 and a linear actuator 42. The linear actuator 42 acts on the roller 41 to move it towards/away with respect to a guiding roller 11, which is part of the conveying means 10 and has a fixed position.

Preferably, the linear actuators 42 are two and are arranged on both sides of the movable roller 41.

Preferably, the conveying direction comprises a first part developing according to a first direction which is mainly horizontal and a second part, downstream of the first portion, developing according to a second direction which is mainly vertical. The means for detecting 30 are arranged at the second portion. The means for re-aligning 40 are arranged at the first portion.

The apparatus 1 comprises a coupling and forming unit 60 arranged downstream of the longitudinal cut unit 20. The coupling and forming unit 60 comprise a pair of a first and a second forming rollers 61a, 61b on which all the sheets cut in strips converge. The first forming roller 61a has at least one cutting blade 62 having a longitudinal development on the roller 61a. The cutting blade 62 is provided with a plurality of notches 63 distributed along the longitudinal development. The cutting blade 62 presses the strips together and simultaneously performs a transversal intermittent cut on them. For transversal cut here is intended a cut along the width of the sheet, i.e., transverse to the length and the transport direction. The intermittent cut is due to the notches 63. In particular, the notches 63 are recesses.

Preferably, the first forming roller 61a comprises a plurality of cutting blades 62 distributed along its lateral cylindrical surface.

The result of this operation is a multi-layered mat 110 of quilted dough.

The multi-layered mat 110 is composed of a plurality of columns of strips, which are coupled together. In particular, the number of strips per column is equal to the number of original sheets.

Each column comprises a plurality of consequent pillow-like elements 100.

Each pillow-like element 100 is bound by at least one conjunction point 102 to the preceding and/or following elements 100. The conjunction point 102 is due to the notch 63 of the cutting blade 62.

The pillow-like element 100 in the multi-layered mat 110 is substantially a snack pellet still bound to other ones.

In particular, the strips are coupled together by pressing them at intervals so that the portions pressed are bound together and defines one edge 101 of the pillow-like element 100. The pillow-like element 100 is defined by two opposite edges 101. The strips remain uncoupled and distanced from each other in the portions between those edges 101.

With the term "quilted", it is intended that the multi-layered mat 110 is composed of these pillow-like elements 100, which have the strips coupled together at the two opposite edges 101, while the strips remain uncoupled and distanced from each other in between.

Indeed, the first forming roller 61a presses the strips together against the second forming roller 61b. Since the cutting blades 62 are distanced from one another, the strips are coupled together only where a cutting blade 62 contacts them, defining one edge 101 of the snack pellet 100. The sheets remain uncoupled and distanced from one another in the portions between those edges 101 contacted by the cutting blades 62.

Therefore, the product obtained is still intermediate and keeps a singular identity, it is not yet a plurality of individual snack pellets.

The multi-layered mat 110 is transported on a conveyor 65 from the coupling and forming unit 60 to the separating unit 70.

According to the illustrated embodiment, the second forming roller 61b comprise a plurality of abutting protuberances 64 in number equal to the cutting blades 62 of the first forming roller 61a. The abutting protuberances 64 offers a support surface against which the sheets are pushed by the cutting blade 62.

In particular, the cutting blades 62 and the abutting protuberances 64 are synchronized.

According to an alternative embodiment (not illustrated), the second forming roller 61b has a plain cylindrical lateral surface.

The apparatus 1 comprises a separating unit 70 arranged downstream of the coupling and forming unit 60 for obtaining a plurality of snack pellets. The separating unit 70 comprises two counter-rotating rollers 71. One of the counter-rotating rollers 71 rotates around an eccentric axle to convey the multi-layered mat 110 towards the other one. The other one of the counter-rotating rollers 71 comprises a plurality of rounded blades to separate the multi-layered mat 110 in a plurality of snack pellets. In particular, the multi-layered mat 110 is separated at the conjunction points 102.

Preferably, the apparatus 1 comprises a drying unit 80 arranged between the coupling and forming unit 60 and the separating unit 70. The drying unit 80 comprises means for ventilating 81 an air flow. Preferably, the means for ventilating 81 comprise one or more fans. Preferably, the fans 81 are arranged to ventilate the conveyor 65.

According to one embodiment, the drying unit 80 comprises means for heating the air flow.

According to a preferred embodiment, the apparatus 1 comprise means for adjusting 90 the operating thrust of the forming rollers 61a, 61b on the sheets. Indeed, the coupling operation is essential to obtain a compliant product at the end of the process. As described above, the sheets have to be coupled together only at those portions which will define the edges of the final snack pellet, while being uncoupled and distanced from each other in the between. It is therefore preferable to have the possibility to adjust the operating thrust of these rollers on the sheets to adapt the apparatus 1 to various boundary conditions.

Preferably, the means for adjusting 90 comprise a first piston 91 for the first forming roller 61a and a second piston 92 for the second forming roller 61b. The first piston 91 and second piston 92 are managed independently so as to generate different pressure values respectively on the first forming roller 61a and second forming roller 61b.

In particular, the means for adjusting 90 comprises an hydraulic system 93 which manages the two pistons 91, 92. The hydraulic system 93 preferably comprises a pump which generates a maximum pressure and two proportional valves (one for each piston 91, 92) which reduces the pressure to a value requested by the operator.

Preferably, the longitudinal cut unit 20 comprises means for recovering 22 the waste dough removed from the sheet when the longitudinal cuts are performed. Indeed, if the width of the sheet exceeds the format desired for the subsequent operations (i.e., exceeds the width of the longitudinal cut rollers), the lateral part of the sheet is cut and loses the pulling of the rollers. Therefore, it splits from the rest of the sheet and falls into a conveyor which leads to a recovering area.

A process for manufacturing multi-layered snack pellets, according to the present invention, is described below. The process is advantageously implemented by the apparatus for manufacturing multi-layered snack pellets above described.

The process comprises a step of advancing at least three sheets of dough. Each sheet of dough has a main development direction, which is a longitudinal direction. Since the process works continuously, the sheet seems perceptively infinitely long. The width of the sheet is the dimension transverse, in particular orthogonal, to the main development direction.

During the step of advancing, the process comprises a step of detecting the position of each of the sheets.

In response to the detection of a mispositioning of one or more of the sheets with respect to a corresponding ideal conveying direction, the process comprises a step of re-aligning the one or more sheets to the ideal conveying direction.

Preferably, the step of detecting the position of each of the sheets takes place by detecting a lateral misalignment of the sheet. Preferably, the step of detecting the position of each of the sheets by detecting the position of one or both sides of each of the sheets.

Preferably, the step of detecting the position of each of the sheets is carried out by means of at least one sensor 30 arranged laterally to the advancing sheets or above the advancing sheets. Preferably, the sensors 30 are two and are arranged at both sides of the advancing sheets.

Preferably, the sensor 30 is a photoelectric sensor.

According to an alternative embodiment, the step of detecting the position of each of the sheets comprises acquiring images and/or videos of said sheets.

Preferably, the step of advancing at least three sheets of dough comprise a step of guiding each of the sheets by means of a series of guiding rollers 11. At least one of the guiding roller 11 is paired with a movable roller 41. The step of re-aligning the one or more of the sheets takes place by moving the roller 41 towards/away with respect to the paired guiding roller 11, which has a fixed position.

The process comprises a step of performing longitudinal cuts on each of the sheets to obtain a plurality of strips which continue to advance. In particular, for longitudinal cuts here is intended cuts along directions substantially parallel to the main development direction. Therefore, the strips of dough are side by side along a direction which is transverse to the main development direction, in particular orthogonal. In other words, they are flanked according to the width of the sheet.

In particular, the strips obtained by a sheet continue to advance together, similarly to the sheet before the longitudinal cuts.

The process comprises a step of coupling together the plurality of strips obtained by the sheets and performing transverse intermittent cuts on them. Intermittent cut here means a cut which is not continuous but it has sections of interruption. For transverse cut here is intended a cut along a direction which is transverse to the main development direction.

The result of this operation is a multi-layered mat 110 of quilted dough. The multi-layered mat 110 is composed of a plurality of columns of strips, which are coupled together. In particular, the number of strips per column is equal to the number of original sheets.

Each column comprises a plurality of consequent pillow-like elements 100. Each pillow-like element 100 is bound by at least one conjunction point 102 to the preceding and/or following elements 100. The conjunction point 100 is due to the intermittent cut of the sheets.

The pillow-like element 100 in the multi-layered mat 110 is substantially a snack pellet still bound to other ones.

In particular, the strips are coupled together by pressing them at intervals so that the portions pressed are bound together and defines one edge 101 of the pillow-like element 100. The pillow-like element 100 is defined by two opposite edges 101. The strips remain uncoupled and distanced from each other in the portions between those edges 101.

With the term "quilted", it is intended that the multi-layered mat 110 is composed of these pillow-like elements 100, which have the strips coupled together at the two opposite edges 101, while the strips remain uncoupled and distanced from each other in between.

Therefore, the product obtained is still intermediate and keeps a singular identity, it is not yet a plurality of individual snack pellets.

The process comprises then a step of separating the multi-layered mat 110 in a plurality of multi-layered snack pellets 100. In particular, this takes place by dividing the multi-layered mat 110 at least along directions transverse to the main development direction.

In particular, the step of separating occurs by cutting the conjunction points 102 between the consequent pillow-like elements 100.

Preferably, the step of separating is carried out by two counter-rotating rollers 71. One of the counter-rotating rollers 71 rotates around an eccentric axle to convey the multi-layered mat 110 towards the other one. The other one of the counter-rotating rollers 71 comprises a plurality of rounded blades to separate the multi-layered mat 110 in a plurality of snack pellets. In particular, the multi-layered mat 110 is separated at the conjunction points 102.

Preferably, the step of coupling together the plurality of strips obtained by the sheets and performing transverse intermittent cuts on them is carried out by a pair of a first and a second forming rollers 61a, 61b into which the strips converge. The first forming roller 61a has at least one cutting blade 62 for pinching the strips together and simultaneously performing a transversal cut on them. For transversal cut here is intended a cut along the width of the sheet, i.e., transverse to the length and the transport direction. The cutting blade 62 has a longitudinal development on the roller 61a and is provided with a plurality of notches 63 distributed along said longitudinal development. The notches 63 cause the intermittent.

The strips are coupled together and cut transversally by the forming rollers 61a, 61b. The coupling operation is performed by the cutting blades 62 of the first forming roller 61a, which press the strips together against the second forming roller 61b. Since the cutting blades 62 are distanced from one another, the strips are coupled together only where a cutting blade 62 contacts/presses them, defining one edge 101 of the pillow-like element 100. The strips remain uncoupled and distanced from one another in the portions between those edges 101 contacted by the cutting blades 62.

Preferably, the process comprises a step of drying the multi-layered mat 110 before the step of separating. The step of drying preferably comprises a step of subjecting the multi-layered mat to an air flow.

Preferably, the process comprises a step of heating the air flow before subjecting the multi-layered mat 110 to the air flow.

According to a preferred embodiment, the process comprises a step of generating an adjustable operating thrust of the forming rollers 61a, 61b on the sheets. Preferably, the step of generating an adjustable operating thrust is carried out by independently applying either different or equal pressure values to the first forming roller 61a and second forming roller 61b. In particular, this step is carried out by a pair of pistons 91, 92, one for each forming roller 61a, 61b and an hydraulic system 93.

Preferably, the process comprises a step of recovering the waste dough cut away from the sheet during the step of performing a plurality of longitudinal cuts.

The characteristics of the process and of the apparatus for manufacturing multi-layered snack pellets, according to the present invention, are clear, as are the advantages.

In particular, the process and the apparatus proposed are able to successfully deal with three or more sheets of dough, coupling them together and obtaining multi-layered snack pellets of high quality, while continuously operating.

Moreover, the sheet monitoring and centering during the transportation enables a correct coupling of the sheets, reducing the risk of non-compliant products.

Moreover, the generation of an intermediate product (the multi-layered mat) allows to subject it to treatments (for example, drying) in an effective way since the multi-layered mat can be pulled while being substantially plain, instead of having a plurality of distinct snack pellets accumulated. The generation of the multi-layered mat is enabled by the presence of the notches on the cutting blade of the forming roller.

Moreover, the possibility to adjust the operating thrust of the rollers on the sheets allows the apparatus to adapt to different parameters of the dough and boundary conditions to ensure the final product to be compliant in any case.

## Claims

1. Process for manufacturing multi-layered snack pellets, comprising the steps of:
advancing at least three sheets of dough, each sheet of dough having a main development direction;
during the step of advancing, detecting the position of each of said sheets; in response to detecting a mispositioning of one or more of the sheets with respect to a corresponding ideal conveying direction, re-aligning the one or more sheets to said ideal conveying direction;
performing longitudinal cuts on each sheet in order to obtain a plurality of strips which continue to advance;
coupling together the plurality of strips obtained by said sheets and performing transverse intermittent cuts on them so that a multi-layered mat (110) of quilted dough is formed;
separating the multi-layered mat (110) into multi-layered snack pellets (100).

2. The process according to claim 1, wherein the step of detecting the position of each of said sheets takes place by detecting the position of one or both sides of each of the sheets.

3. The process according to claim 2, wherein the step of detecting the position of each of said sheets is carried out by means of one or more sensors (30) arranged laterally to the advancing sheets or above the advancing sheets.

4. The process according to any one of the preceding claims, wherein the step of advancing at least three sheets of dough comprise a step of guiding each of the sheets by means of a series of guiding rollers (11), at least one of the guiding roller (11) being paired with a movable roller (41), the step of re-aligning the sheet taking place by moving the roller (41) towards/away with respect to said at least one of the guiding roller (11).

5. The process according to any one of the preceding claims, wherein the step of coupling together the plurality of strips obtained by the sheets and performing transverse intermittent cuts on them is carried out by a pair of a first and a second forming rollers (61a, 61b), said first forming roller (61a) having at least one cutting blade (62) for pinching the strips together and simultaneously performing a transversal cut of the strips, said cutting blade (62) having a longitudinal development on the roller (61a) and being provided with a plurality of notches (63) distributed along said longitudinal development, the notches (63) causing the intermittent cut.

6. The process according to claim 5, comprising the step of generating an adjustable thrust of the forming rollers (61a, 61b) on the sheets.

7. The process according to any one of the preceding claims, comprising a step of drying the multi-layered mat (110).

8. Apparatus (1) for manufacturing multi-layered snack pellets (100), comprising:
means for advancing (10) at least three sheets of dough to a longitudinal cut unit (20);
the longitudinal cut unit (20) comprising for each sheet a pair of longitudinal cut rollers (21) arranged to perform a plurality of longitudinal cuts on the sheet in order to obtain a plurality of strips;
means for detecting (30) the position of each of the sheets on the means for advancing (10);
means for re-aligning (40) the sheets to an ideal conveying direction;
a control unit (50) configured to, in response to the detection of a mispositioning of one or more of the sheets on the means for advancing (10), command the means for re-aligning (40) in order to bring the one or more of the sheets back to the ideal conveying direction;
a coupling and forming unit (60) arranged downstream of the longitudinal cut unit (20); said coupling and forming unit (60) comprising a pair of a first and a second forming rollers (61a, 61b) on which all the sheets cut in strips converge, said first forming roller (61a) having at least one cutting blade (62) having a longitudinal development on the roller (61a) and being provided with a plurality of notches (63) distributed along said longitudinal development for coupling the strips together and simultaneously performing a transversal intermittent cut on them;
a separating unit (70) arranged downstream of the coupling and forming unit (60), said separating unit (70) comprising two counter-rotating rollers (71) for obtaining a plurality of snack pellets.

9. Apparatus (1) according to claim 8, wherein the means for monitoring (30) are arranged to detect the position of one or both sides of each of the sheets.

10. Apparatus (1) according to claim 9, wherein the means for monitoring (30) comprises at least one sensor, preferably a photoelectric sensor, arranged laterally to the advancing sheets or above the advancing sheets.

11. Apparatus (1) according to any one of claims 8 to 10, wherein the means for advancing (10) comprise for each sheet a series of guiding rollers (11) for guiding the sheet in its advance, said means for re-aligning (40) the sheet comprising a movable roller (41) and a linear actuator (42), said movable roller (41) being paired with one of the guiding roller (11), said linear actuator (42) acting on the roller (41) to move it towards/away with respect to said guiding roller (11).

12. Apparatus (1) according to any one of claims 8 to 11, comprising means for adjusting (90) the operating thrust of the forming rollers (61a, 61b) on the sheets.

13. Apparatus (1) according to claim 12, wherein the means for adjusting (90) comprises a first piston (91) for the first forming roller (61a) and a second piston (92) for the second forming roller (61b); the first piston (91) and second piston (92) are managed independently from each other so as to generate different pressure values on the first forming roller (61a) and second forming roller (61b), respectively.

14. Apparatus (1) according to any one of claims 8 to 13, comprising a drying unit (80) arranged between the coupling and forming unit (60) and the separating unit (70).

## Patentansprüche

1. Verfahren zur Herstellung von mehrschichtigen Snack-Pellets, umfassend die folgenden Schritte:
Vorschieben von mindestens drei Teigbahnen, wobei eine jede Teigbahn eine Hauptentwicklungsrichtung aufweist;
während des Schritts des Vorschiebens Erkennen der Position einer jeden dieser Bahnen; als Reaktion auf das Erkennen einer Fehlpositionierung von einer oder mehreren der Bahnen in Bezug auf eine entsprechende ideale Förderrichtung Neuausrichten der einen oder mehreren Bahnen zur idealen Förderrichtung;
Ausführen von Längsschnitten auf einer jeden Bahn, um eine Vielzahl von Streifen zu gewinnen, die weiter vorgeschoben werden;
Koppeln der Vielzahl von aus den Bahnen gewonnenen Streifen und Ausführen von quer verlaufenden, intermittierenden Schnitten auf diesen, sodass eine mehrschichtige Matte (110) aus abgestepptem Teig gebildet wird;
Trennen der mehrschichtigen Matte (110) in mehrschichtige Snack-Pellets (100).

2. Verfahren nach Anspruch 1, wobei der Schritt zum Erkennen der Position einer jeden der Bahnen erfolgt, indem die Position auf einer oder beiden Seiten einer jeden der Bahnen erkannt wird.

3. Verfahren nach Anspruch 2, wobei der Schritt zum Erkennen der Position einer jeden der Bahnen mittels eines oder mehrerer Sensoren (30) durchgeführt wird, die seitlich der vorgeschobenen Bahnen oder oberhalb der vorgeschobenen Bahnen angeordnet sind.

4. Verfahren nach einem der vorhergehenden Ansprüche, wobei der Schritt zum Vorschieben von mindestens drei Teigbahnen einen Schritt zum Führen einer jeden der Teigbahnen mittels einer Reihe von Führungswalzen (11) umfasst, wobei mindestens eine der Führungswalzen (11) mit einer bewegbaren Walze (41) gepaart ist, wobei der Schritt zum Neuausrichten erfolgt, indem die Walze (41) in Bezug auf die mindestens eine Führungswalze (11) hinführend/wegführend bewegt wird.

5. Verfahren nach einem der vorhergehenden Ansprüche, wobei der Schritt zum Koppeln der Vielzahl von aus den Bahnen gewonnenen Streifen und zum Ausführen quer verlaufender, intermittierender Schnitte auf diesen durch ein Paar von ersten und zweiten Formungswalzen (61a, 61b) durchgeführt wird, wobei die ersten Formungswalzen (61a) mindestens ein Schneidmesser (62) aufweisen, um die Streifen zusammenzuklemmen und gleichzeitig einen quer verlaufenden Schnitt der Streifen auszuführen, wobei das Schneidmesser (62) eine Längsentwicklung auf der Walze (61a) aufweist und mit einer Vielzahl von Kerben (63) versehen ist, die entlang der Längsentwicklung verteilt sind, wobei die Kerben (63) den intermittierenden Schnitt herbeiführen.

6. Verfahren nach Anspruch 5, umfassend den Schritt zum Erzeugen eines einstellbaren Anpressdrucks der Formungswalzen (61a, 61b) auf die Bahnen.

7. Verfahren nach einem der vorhergehenden Ansprüche, umfassend einen Schritt zum Trocknen der mehrschichtigen Matte (110).

8. Vorrichtung (1) zur Herstellung von mehrschichtigen Snack-Pellets (100), umfassend:
Mittel zum Vorschieben (10) von mindestens drei Teigbahnen zu einer Längsschneideeinheit (20),
wobei die Längsschneideeinheit (20) für eine jede Bahn ein Paar Längsschneidewalzen (21) umfasst, die angeordnet sind, um eine Vielzahl von Längsschnitten auf der Bahn auszuführen, um eine Vielzahl von Streifen zu gewinnen;
Mittel zum Erkennen (30) der Positionen einer jeden der Bahnen auf den Vorschubmitteln (10);
Mittel zum Neuausrichten (40) der Bahnen zu einer idealen Förderrichtung;
eine Steuereinheit (50), die ausgelegt ist, um als Reaktion auf das Erkennen einer Fehlpositionierung von einer oder mehreren der Bahnen auf den Vorschubmitteln (10) die Mittel zum Neuausrichten (40) so zu steuern, dass die eine oder mehreren der Bahnen zur idealen Förderrichtung zurückgeführt werden;
eine Kupplungs- und Formungseinheit (60), die stromabwärts der Längsschneideeinheit (20) angeordnet ist, wobei die Kupplungs- und Formungseinheit (60) ein Paar aus einer ersten und einer zweiten Formungswalze (61a, 61b) umfasst, auf dem alle in Streifen geschnittene Bahnen zusammenlaufen, wobei die erste Formungswalze (61a) mindestens ein Schneidmesser (62) aufweist, das eine Längsentwicklung auf der Walze (61a) aufweist und mit einer Vielzahl von Kerben (63) versehen ist, die entlang der Längsentwicklung verteilt sind, um die Streifen zu koppeln und gleichzeitig einen quer verlaufenden, intermittierenden Schnitt auf diesen auszuführen;
eine Trenneinheit (70), die stromabwärts der Kupplungs- und Formungseinheit (60) angeordnet ist, wobei die Trenneinheit (70) zwei sich gegenläufig drehende Walzen (71) umfasst, um eine Vielzahl von Snack-Pellets zu gewinnen.

9. Vorrichtung (1) nach Anspruch 8, wobei die Mittel zum Überwachen (30) angeordnet sind, um die Position von einer oder beiden Seiten einer jeden der Bahnen zu erkennen.

10. Vorrichtung (1) nach Anspruch 9, wobei die Mittel zum Überwachen (30) mindestens einen Sensor, vorzugsweise einen photoelektrischen Sensor, umfassen, der seitlich der vorgeschobenen Bahnen oder oberhalb der vorgeschobenen Bahnen angeordnet ist.

11. Vorrichtung (1) nach einem der Ansprüche 8 bis 10, wobei die Mittel zum Vorschieben (10) für eine jede Bahn eine Reihe von Führungswalzen (11) umfassen, um die Bahn bei ihrem Vorschub zu führen, wobei die Mittel zum Neuausrichten (40) der Bahn eine bewegbare Walze (41) und einen Linearantrieb (42) umfassen, wobei die bewegbare Walze (41) mit einer der Führungswalzen (11) gepaart ist, wobei der Linearantrieb (42) auf die Walze (41) wirkt, um diese in Bezug auf die Führungswalze (11) hinführend/wegführend zu bewegen.

12. Vorrichtung (1) nach einem der Ansprüche 8 bis 11, umfassend Mittel zum Einstellen (90) des Betriebsanpressdrucks der Formungswalzen (61a, 61b) auf die Bahnen.

13. Vorrichtung (1) nach Anspruch 12, wobei die Mittel zum Einstellen (90) einen ersten Kolben (91) für die erste Formungswalze (61a) und einen zweiten Kolben (92) für die zweite Formungswalze (61b) umfassen, wobei der erste Kolben (91) und der zweite Kolben (92) unabhängig voneinander angesteuert werden, sodass unterschiedliche Druckwerte jeweils auf die erste Formungswalze (61a) und die zweite Formungswalze (61b) erzeugt werden.

14. Vorrichtung (1) nach einem der Ansprüche 8 bis 13, umfassend eine Trocknungseinheit (80), die zwischen der Kupplungs- und Formungseinheit (60) und der Trenneinheit (70) angeordnet ist.

## Revendications

1. Procédé de fabrication de granulés d'en-cas multicouches, comprenant les étapes de :
faire avancer au moins trois feuilles de pâte, chaque feuille de pâte ayant une direction de développement principale ;
au cours de l'étape consistant à faire avancer, détecter la position de chacune desdites feuilles ; en réponse à la détection d'un mauvais positionnement d'une ou plusieurs des feuilles par rapport à une direction de transport idéale correspondante, réaligner l'une ou plusieurs feuilles dans ladite direction de transport idéale ;
réaliser des coupes longitudinales sur chaque feuille afin d'obtenir une pluralité de bandes qui continuent à avancer ;
coupler ensemble la pluralité de bandes obtenues par lesdites feuilles et réaliser des coupes intermittentes transversales sur celles-ci de sorte qu'un tapis multicouches (110) de pâte matelassée soit formé ;
séparer le tapis multicouches (110) en granulés d'en-cas multicouches (100).

2. Procédé selon la revendication 1, dans lequel l'étape consistant à détecter la position de chacune desdites feuilles se déroule en détectant la position d'un ou des deux côtés de chacune des feuilles.

3. Procédé selon la revendication 2, dans lequel l'étape consistant à détecter la position de chacune desdites feuilles est effectuée au moyen d'un ou de plusieurs capteurs (30) agencés latéralement par rapport aux feuilles qui avancent ou au-dessus des feuilles qui avancent.

4. Procédé selon l'une quelconque des revendications précédentes, dans lequel l'étape consistant à faire avancer au moins trois feuilles de pâte comprend une étape consistant à guider chacune des feuilles au moyen d'une série de rouleaux de guidage (11), au moins l'un des rouleaux de guidage (11) étant apparié à un rouleau mobile (41), l'étape consistant à réaligner la feuille se déroulant en rapprochant/éloignant le rouleau (41) par rapport audit au moins un des rouleaux de guidage (11).

5. Procédé selon l'une quelconque des revendications précédentes, dans lequel l'étape consistant à coupler ensemble la pluralité de bandes obtenues par les feuilles et à réaliser des coupes transversales intermittentes sur celles-ci est effectuée par une paire d'un premier et d'un second rouleau de formage (61a, 61b), ledit premier rouleau de formage (61a) ayant au moins une lame de coupe (62) pour pincer les bandes ensemble et réaliser simultanément une coupe transversale des bandes, ladite lame de coupe (62) ayant un développement longitudinal sur le rouleau (61a) et étant pourvue d'une pluralité d'encoches (63) réparties le long dudit développement longitudinal, les encoches (63) provoquant la coupe intermittente.

6. Procédé selon la revendication 5, comprenant l'étape consistant à générer une poussée réglable des rouleaux de formage (61a, 61b) sur les feuilles.

7. Procédé selon l'une quelconque des revendications précédentes, comprenant une étape consistant à sécher le tapis multicouches (110).

8. Appareil (1) de fabrication de granulés d'en-cas multicouches (100), comprenant :
des moyens pour faire avancer (10) au moins trois feuilles de pâte vers une unité de coupe longitudinale (20) ;
l'unité de coupe longitudinale (20) comprenant pour chaque feuille une paire de rouleaux de coupe longitudinale (21) agencés pour réaliser une pluralité de coupes longitudinales sur la feuille afin d'obtenir une pluralité de bandes ;
des moyens pour détecter (30) la position de chacune des feuilles sur les moyens pour faire avancer (10) ;
des moyens pour réaligner (40) les feuilles dans une direction de transport idéale ;
une unité de commande (50) configurée pour, en réponse à la détection d'un mauvais positionnement d'une ou plusieurs des feuilles sur les moyens pour faire avancer (10), commander les moyens pour réaligner (40) afin de ramener l'une ou plusieurs feuilles dans la direction de transport idéale ;
une unité de couplage et de formage (60) agencée en aval de l'unité de coupe longitudinale (20) ; ladite unité de couplage et de formage (60) comprenant une paire d'un premier et d'un second rouleaux de formage (61a, 61b) sur lesquels convergent toutes les feuilles coupées en bandes, ledit premier rouleau de formage (61a) ayant au moins une lame de coupe (62) ayant un développement longitudinal sur le rouleau (61a) et étant pourvu d'une pluralité d'encoches (63) réparties le long dudit développement longitudinal pour coupler les bandes ensemble et réaliser simultanément une coupe intermittente transversale sur celles-ci ;
une unité de séparation (70) agencée en aval de l'unité de couplage et de formage (60), ladite unité de séparation (70) comprenant deux rouleaux contre-rotatifs (71) pour obtenir une pluralité de granulés d'en-cas.

9. Appareil (1) selon la revendication 8, dans lequel les moyens pour surveiller (30) sont agencés pour détecter la position d'un ou des deux côtés de chacune des feuilles.

10. Appareil (1) selon la revendication 9, dans lequel les moyens pour surveiller (30) comprennent au moins un capteur, de préférence un capteur photoélectrique, agencé latéralement par rapport aux feuilles qui avancent ou au-dessus des feuilles qui avancent.

11. Appareil (1) selon l'une quelconque des revendications 8 à 10, dans lequel les moyens pour faire avancer (10) comprennent pour chaque feuille une série de rouleaux de guidage (11) pour guider la feuille dans son avancement, lesdits moyens pour réaligner (40) la feuille comprenant un rouleau mobile (41) et un actionneur linéaire (42), ledit rouleau mobile (41) étant apparié avec l'un du rouleau de guidage (11), ledit actionneur linéaire (42) agissant sur le rouleau (41) pour le rapprocher/éloigner par rapport audit rouleau de guidage (11).

12. Appareil (1) selon l'une quelconque des revendications 8 à 11, comprenant des moyens pour ajuster (90) la poussée de fonctionnement des rouleaux de formage (61a, 61b) sur les feuilles.

13. Appareil (1) selon la revendication 12, dans lequel les moyens pour ajuster (90) comprennent un premier piston (91) pour le premier rouleau de formage (61a) et un second piston (92) pour le second rouleau de formage (61b) ; le premier piston (91) et le second piston (92) sont gérés indépendamment l'un de l'autre de manière à générer des valeurs de pression différentes sur le premier rouleau de formage (61a) et le second rouleau de formage (61b), respectivement.

14. Appareil (1) selon l'une quelconque des revendications 8 à 13, comprenant une unité de séchage (80) agencée entre l'unité de couplage et de formage (60) et l'unité de séparation (70).
